# EUROPEAN PATENT APPLICATION

(11) **EP 4 723 591 A1**
(43) Date of publication of application: **08.04.2026**
(21) Application number: 24814516.1
(22) Date of filing: 30.05.2024
(51) Int. Cl.: H04L 51/10, G06F 9/451

(54) **METHOD AND APPARATUS FOR SENDING INTERACTION INFORMATION, ELECTRONIC DEVICE, AND STORAGE MEDIUM**

(30) Priority: 30.05.2023 CN 202310629026
(71) Applicant: Beijing Zitiao Network Technology Co., Ltd., Beijing 100190 (CN)
(72) Inventor: LIU, Fujia, Beijing 100028 (CN); WANG, Ruifeng, Beijing 100028 (CN)
(74) Representative: Grünecker Patent- und Rechtsanwälte PartG mbB
(86) International application number: PCT/CN2024/096227
(87) International publication number: WO 2024/245319

(57) **Abstract**

Embodiments of the present invention provide a method and apparatus for sending interaction information, an electronic device, and a storage medium. The method comprises: displaying an object flow display interface corresponding to target media content, the object flow display interface being used for displaying at least one associated object of at least part of interaction information of the target media content, object information of the associated object being contained in the corresponding interaction information, and the object flow display interface supporting switching display of the at least one associated object on the basis of a triggering operation; in response to an information generation operation acting in the object flow display interface, displaying an information generation interface, the information generation interface being used for generating first interaction information of the target media content; and in response to an information sending operation, sending the first interaction information as the interaction information of the target media content.

## Description

The present application claims priority to Chinese Patent Application No. 202310629026.1 filed on May 30, 2023, the entire content of which is hereby incorporated by reference as a part of the present application.

### TECHNICAL FIELD

Embodiments of the present disclosure relate to a method and an apparatus for publishing interaction information, an electronic device, and a storage medium.

### BACKGROUND

Currently, in some Internet platforms, users can view pictures corresponding to thumbnails contained in comments in picture in-stream of comments. However, the interaction mode of picture in-stream is simple.

### SUMMARY

Embodiments of the present disclosure provide a method and an apparatus for publishing interaction information, an electronic device, and a storage medium, so as to enrich the interaction mode of picture in-stream.

In a first aspect, an embodiment of the present disclosure provides a method for publishing interaction information, including:
displaying an object stream display interface corresponding to target media content, where the object stream display interface is used to display at least one associated object of at least part of interaction information of the target media content, object information of the associated object is contained in corresponding interaction information, and the object stream display interface supports switching display of the at least one associated object based on a trigger operation;
in response to an information generation operation on the object stream display interface, displaying an information generation interface, where the information generation interface is used to generate first interaction information of the target media content; and
in response to an information publishing operation, publishing the first interaction information as interaction information of the target media content.

In a second aspect, an embodiment of the present disclosure further provides an apparatus for publishing interaction information, including:
a first interface display module, configured to display an object stream display interface corresponding to target media content, where the object stream display interface is used to display at least one associated object of at least part of interaction information of the target media content, where object information of the associated object is contained in corresponding interaction information, and the object stream display interface supports switching display of the at least one associated object based on a trigger operation;
a second interface display module, configured to in response to an information generation operation on the object stream display interface, display an information generation interface, where the information generation interface is used to generate first interaction information of the target media content; and
an information publishing module, configured to in response to an information publishing operation, publish the first interaction information as interaction information of the target media content.

In a third aspect, an embodiment of the present disclosure further provides an electronic device, including:
one or more processors;
a memory, configured to store one or more programs;
when the one or more programs are executed by the one or more processor, the one or more processors are caused to implement the method for publishing interaction information according to the embodiment of the present disclosure.

In a fourth aspect, an embodiment of the present disclosure further provides a computer-readable storage medium having a computer program stored thereon, and when the program is executed by a processor, the method for publishing interaction information according to the embodiment of the present disclosure is implemented.

### BRIEF DESCRIPTION OF DRAWINGS

The above and other features, advantages, and aspects of embodiments of the present disclosure become more apparent with reference to the following specific implementations and in conjunction with the accompanying drawings. Throughout the drawings, the same or similar reference numerals denote the same or similar elements. It should be understood that the accompanying drawings are schematic and that parts and elements are not necessarily drawn to scale.
Fig. 1 is a schematic flow diagram of a method for publishing interaction information according to an embodiment of the present disclosure.
Fig. 2 is a schematic display diagram of interaction information according to an embodiment of the present disclosure.
Fig. 3 is a schematic display diagram of an object stream display interface according to an embodiment of the present disclosure;
Fig. 4 is a schematic display diagram of a first associated object according to an embodiment of the present disclosure;
Fig. 5 is a schematic display diagram of a first interaction information according to an embodiment of the present disclosure;
Fig. 6 is a schematic flow diagram of another method for publishing interaction information according to an embodiment of the present disclosure;
Fig. 7 is a schematic display diagram of a first information generation interface according to an embodiment of the present disclosure;
Fig. 8 is a schematic display diagram of a second information generation interface according to an embodiment of the present disclosure;
Fig. 9 is a schematic display diagram of another object stream display interface according to an embodiment of the present disclosure;
Fig. 10 is a schematic display diagram of another first information generation interface according to an embodiment of the present disclosure;
Fig. 11 is a schematic display diagram of another object stream display interface according to an embodiment of the present disclosure;
Fig. 12 is a schematic display diagram of a third information generation interface according to an embodiment of the present disclosure;
Fig. 13 is a structural block diagram of an apparatus for publishing interaction information according to an embodiment of the present disclosure; and
Fig. 14 is a schematic structural diagram of an electronic device according to an embodiment of the present disclosure.

### DETAILED DESCRIPTION

Embodiments of the present disclosure are described in more detail below with reference to the accompanying drawings. Although some embodiments of the present disclosure are shown in the accompanying drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are only for exemplary purposes and are not intended to limit the scope of protection of the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this regard.

The terms "include/comprise" used herein and the variations thereof are an open-ended inclusion, namely, "include/comprise but not limited to". The term "based on" is "at least partially based on". The term "an embodiment" means "at least one embodiment". The term "another embodiment" means "at least one another embodiment". The term "some embodiments" means "at least some embodiments". The relevant definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers "one" and "a plurality of" mentioned in the present disclosure are illustrative and not restrictive, and those skilled in the art should understand that unless the context clearly indicates otherwise, the modifiers should be understood as "one or more".

The names of messages or information exchanged between a plurality of apparatuses in the implementations of the present disclosure are used for illustrative purposes only and are not used to limit the scope of these messages or information.

It is understandable that before the technical solutions disclosed in the embodiments of the present disclosure are used, the types, scope of use, usage scenarios, and the like of personal information involved in the present disclosure shall be informed to users and the users' authorization shall be obtained through appropriate means in accordance with relevant laws and regulations.

For example, when receiving an active request from a user, a prompt message is sent to the user to explicitly prompt the user that the operation requested by the user will need to obtain and use the user's personal information. Therefore, the user can voluntarily choose whether to provide personal information to a software or hardware such as an electronic device, an application, a server, or a storage medium that performs an operation of the technical solution of the present disclosure based on the prompt information.

As an optional but non-restrictive implementation, in response to receiving an active request from a user, the manner of sending a prompt message to the user may be, for example, a pop-up window, and the prompt message may be presented in the pop-up window in text. In addition, the pop-up window may also carry a selection control for the user to select "agree" or "disagree" to provide personal information to the electronic device.

It is understandable that the above process of notifying and obtaining the user authorization is only illustrative and does not constitute a limitation on the implementation of the present disclosure. Other manners that comply with relevant laws and regulations may also be applied to the implementation of the present disclosure.

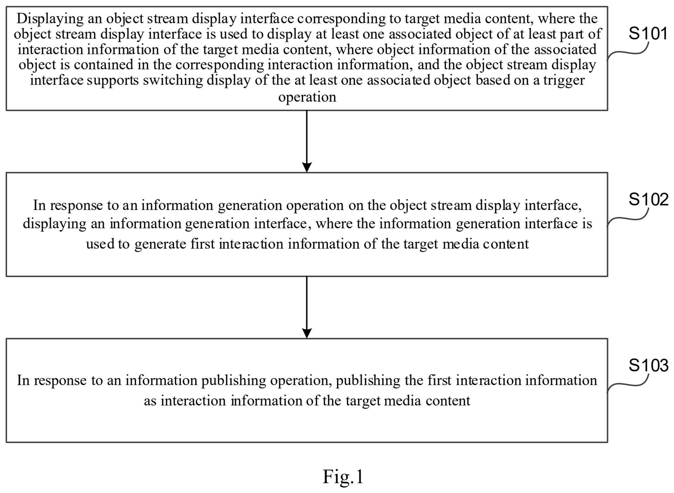

Fig. 1 is a schematic flow diagram of a method for publishing interaction information according to an embodiment of the present disclosure. The method may be performed by an apparatus for publishing interaction information, where the apparatus may be implemented by software and/or hardware, may be configured in an electronic device, typically may be configured in a mobile phone or tablet. The method for publishing interaction information provided by the embodiment of the present disclosure is applicable to a scenario in which publishing new interaction information is triggered in an object stream display interface of media content, particularly applicable to a scenario in which publishing new comment information is triggered in the picture stream and/or video stream and/or a video stream display interface of comment information of media content. As shown in Fig. 1, the method for publishing interaction information provided in the present embodiment may include:
S101, displaying an object stream display interface corresponding to target media content, where the object stream display interface is used to display at least one associated object of at least part of interaction information of the target media content, where object information of the associated object is contained in the corresponding interaction information, and the object stream display interface supports switching display of the at least one associated object based on a trigger operation.

In the embodiment, the user may view the associated object corresponding to the object information contained in at least part of the interaction information of the media content through the object stream display interface. For example, the user may view the picture/video corresponding to the thumbnail/video information in the interaction information of the media content through the object stream display interface.

The target media content may be understood as media content corresponding to the currently displayed object stream display interface, and the media content may be, for example, video content, imagetext content, or the like. The interaction information of the target media content may be understood as the information of interaction with the target media content, such as the comment information or barrage information of the target media content. An example in which the interaction information is comment information is illustrated below.

The associated object of the interaction information may be an object associated with the interaction information, for example, the objection in which the object information is contained in the interaction information. For example, assuming that a piece of certain interaction information of the target media content contains a piece of certain object information. In this case, the object corresponding to the object information contained in the piece of interaction information may be referred to as an associated object of the piece of interaction information. Exemplarily, the associated object may be an object of a preset type, for example, the type of the associated object may include at least one of picture and video, that is, the associated object may be an object of a picture type or a video type. The object information of the associated object may be regarded as information of the associated object, such as a thumbnail image, a cover page, a link, or the like of the associated object.

The object stream display interface corresponding to the certain media content may be understood as the display interface used to display at least one associated object of at least part of the interaction information of the media content, in other words, the object stream display interface may be used to display one or more associated objects of one or more pieces of interaction information of the media content. The object stream display interface may be used to display associated objects of the same or different interaction information. Exemplarily, the object stream display interface may be used to display associated objects of the same or different interaction information in a full-screen display.

Each associated object may be switched and displayed in the object stream display interface based on the trigger operation of the user. For example, the associated object currently displayed in the object stream display interface may be switched based on the corresponding trigger operation of the user and the arrangement order of object information of each associated object. The arrangement order of the object information may be, for example, the arrangement order of each object information in displaying, and may be determined based on the arrangement order of different interaction information in displaying, or the arrangement order of the object information contained in each piece of interaction information within the corresponding interaction information, or the like. The trigger operation may be a trigger operation for instructing switch of the associated object currently displayed in the object stream display interface, for example, a preset swiping operation applied on the object stream display interface or an operation for triggering an object switching control in the object stream display interface, or the like. The preset swiping operation may be, for example, a vertical swiping operation.

Specifically, the object stream display interface corresponding to the target media content is displayed, a certain associated object of certain interaction information of the target display interface is displayed in the object stream media content, and the associated object currently displayed in the object stream display interface may be switched based on the corresponding trigger of the user. The triggering mode of displaying the object stream display interface corresponding to the target media content is not limited, for example, at least part of the interaction information of the target media content may be displayed and is displayed when the user triggers the object information contained in the certain interaction information. For example, the interaction information may be displayed in the interaction information panel of the target media content or in the detail page, and the like. An example in which the interaction information is displayed in the interaction information panel of the target media content is illustrated below.

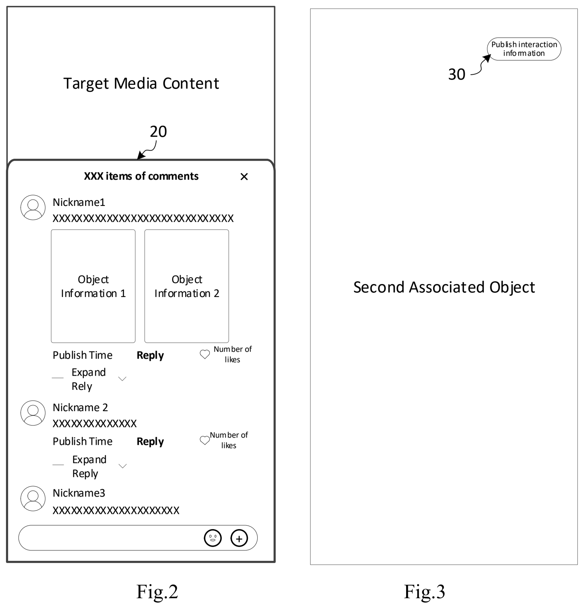

An example in which the interaction information is comment information is illustrated. At least part of the comment information of the target media content may be displayed, for example, at least part of the comment information of the target media content is displayed in the comment panel 20 (as shown in Fig. 2) of the target media content. When it is detected that certain object information contained in a certain piece of interaction information of the target media content is triggered by the user, an object stream display interface of the target media content may be displayed, and an associated object corresponding to the object information triggered by the user may be displayed in the object stream display interface, as shown in Fig. 3 (in the figure, the currently displayed associated object being a second associated object is illustrated as an example); and when a trigger operation for instructing switch of the associated object displayed in the object stream display interface by the user is received, the associated object currently displayed in the object stream display interface is switched.

S102, in response to an information generation operation on the object stream display interface, displaying an information generation interface, where the information generation interface is used to generate first interaction information of the target media content.

The information generation operation may be a trigger operation for displaying the information generation interface to generate the interaction information to be published by the user through the information generation interface. Exemplarily, the information generation operation may be a preset gesture operation applied on the information stream display interface, or an operation for triggering a corresponding control in the information stream display interface, or the like.

The information generation interface may be an interface for generating interaction information of the target media content, and may include at least one of a first information generation interface, a second information generation interface, and a third information generation interface, and the first information generation interface, the second information generation interface, and the third information generation interface may generate interaction information in different ways. Exemplarily, the first information generation interface may be an information input interface, the second information generation interface may be an associated object selection interface, and the third information generation interface may be an associated object generation interface. The display mode of the information generation interface may be set as needed, for example, the information generation interface may be displayed in the display interface of the target media content or displayed in the object stream display interface of the target media content. The information generation interface may also be displayed independently from the display interface and the object stream display interface of the target media content, for example, it is displayed as in the form of an independent page.

The first interaction information may be interaction information generated by the user through the information generation interface, and may be first-level interaction information and/or second-level interaction information of the target media content.

Specifically, when the information generation operation applied on the object stream display interface is received, the information generation interface may be displayed. For example, the first information generation interface, the second information generation interface, or the third information generation interface is displayed, or the like, and the interaction information to be published by the user may be generated based on the input operation, the selection operation, the photographing operation, or the like by the user on the information generation interface.

The applicable Internet platform as an application program is illustrated as an example. In the embodiment, the user may generate the interaction information to be published in the information generation interface by executing the information generation operation in the object stream display interface to instruct the current application program to display the information generation interface without exiting the object stream display interface, thereby enriching the interaction mode of the object stream display interface and the publishing mode of the interaction information, and simplifying the operation required for the user to publish the interaction information when the object stream display interface is displayed.

In some optional embodiments, the information generation operation is applied on a second control, and the second control remains displayed in the object stream display interface, or is displayed in the object stream display interface when a preset display condition is satisfied.

The second control may be a control for triggering display of the information generation interface, and the second control may be displayed in the object stream display interface. For example, when the object stream display interface is displayed, the second control may remain to be displayed in the object stream display interface, in other words, when the object stream display interface is initially displayed, the second control may be displayed in the object stream display interface; or the second control is displayed in the object stream display interface when a preset display condition is satisfied.

In the embodiment, the preset display condition is not limited. For example, the preset display condition may be that a duration of displaying the object stream display interface this time reaches a preset duration, or a count of associated objects displayed in the object stream display interface after displaying the object stream display interface this time reaches a preset count, or a number of times of trigger operations executed by the user for instructing switch of the associated objects displayed in the object stream display interface reaches a preset number of times, or the like.

The count of the second controls displayed in the object stream display interface may be one or more, and different second controls may be used to trigger display of different information generation interfaces. For example, the first information generation interface, the second information generation interface, and the third information generation interface may be triggered to display by different second controls. The display conditions of different second controls may be different. For example, when the second associated object currently displayed in the object stream display interface is an associated object generated by a certain element, the second control for instructing display of the third information generation interface is displayed in the object stream display interface; and/or, when the second associated object currently displayed in the object stream display interface is not an associated object generated by the certain element, a second control for instructing display of the first information generation interface or the second information generation interface is displayed in the object stream display interface.

S103: in response to an information publishing operation, publishing the first interaction information as interaction information of the target media content.

In the embodiment, when the information publishing operation of the user is received, the first interaction information generated by the user through the information generation interface may be published. That is, the first interaction information generated by the user through the information generation interface may be published as the interaction information of the target media content, for example, the first interaction information may be published as the first-level interaction information and/or the second-level interaction information of the target media content.

The information publishing operation may be a trigger operation for instructing publishing of the first interaction information generated by the user through the information generating interface, for example, an operation of triggering a publishing control or an operation of performing a corresponding information publishing gesture. Exemplarily, the information publishing operation may be an operation of triggering the publishing control displayed in the information generation interface, for example, an operation of triggering the publishing control displayed in the first information generation interface, the second information generation interface, or the third information generation interface. In this case, optionally, the publishing control is displayed in at least one of the first information generation interface, the second information generation interface, and the third information generation interface, and the publishing control is used to trigger execution of the information publishing operation.

In some optional embodiments, the first interaction information may be published as the first-level interaction information and/or the second-level interaction information of the target media content depending on the difference of the information generation interfaces or the information publishing operations. For example, when the first information publishing operation is received, the first interaction information may be published as the first-level interaction information of the target media content.

In this case, optionally, in response to the information publishing operation, publishing the first interaction information as interaction information of the target media content includes: in response to a first information publishing operation, publishing the first interaction information as first-level interaction information of the target media content, where the interaction information of the target media content includes first-level interaction information and second-level interaction information, and the second-level interaction information is reply content for the interaction information.

The first-level interaction information may be understood as the information that directly interacts with the target media content. The second-level interaction information may be information for interacting with the interaction information of the target media content, for example, information for replying to certain interaction information of the target content, and the certain interaction information may be first-level interaction information or second-level interaction information of the target media content. Comment information is illustrated as an example. The first-level interaction information may be the first-level comment information published for the target media content, and the first-level interaction information is not the next-level comment information of the comments information of the target comment information. The second-level interaction information is the information that replies to certain comment information of the target media content, such as the next-level comment information of the certain comment information of the target media comment.

In some optional embodiments, the first-level interaction information and the second-level interaction information of the target media content may be generated through different information generation interfaces. That is, the first-level interaction information and the second-level interaction information of the target information are generated in different information generation interfaces, so as to further enrich the generation mode of the interaction information and satisfy the requirements of the user for publishing different interaction information. In this case, optionally, the information generation interface is a first-level interaction information generation interface, and the first-level interaction information generation interface is used to generate the first-level interaction information, and the method further includes: in response to a second trigger operation on the object stream display interface, displaying a second-level interaction information generation interface. The second-level interaction information generation interface is used to generate the second-level interaction information.

The first-level interaction information generation interface may be an information generation interface for generating the first-level interaction information of the target media content; The second-level interaction information generation interface may be an information generation interface for generating the second-level interaction information of the target media content, and the second-level interaction information may be, for example, next-level interaction information of the second interaction information corresponding to the second associated object currently displayed in the object stream display interface. The second trigger operation may be a trigger operation for instructing display of the second-level interaction information generation interface of the target media content, for example, an operation of triggering a certain control or a certain area in the information generation interface. The second trigger operation and the information generation operation may be different trigger operations, for example, the second trigger operation and the information generation operation may be trigger operations applied on different controls in the object stream generation interface or operations of triggering a certain control in the object stream generation interface by using different triggering modes.

Exemplarily, after displaying the object stream display interface corresponding to the target media content, in response to the information generation operation on the object stream display interface, a first-level interaction information generation interface of the target media content is displayed for a user to generate the first-level interaction information of the target media content through the first-level interaction information generation interface; and/or, in response to the second trigger operation on the object stream display interface, a second-level interaction information generation interface of the target media content is displayed for the user to generate the second-level interaction information of the target media content through the second-level interaction information generation interface.

Accordingly, when an information publishing operation of the user is received, the generated interaction information may be published. For example, when an information publishing operation (such as the first information publishing operation) applied on the first-level interaction information generation interface is received, the interaction information generated by the user through the first-level interaction information generation interface is published as the first-level interaction information of the target media content; when the information publishing operation applied on the second-level interaction information generation interface is received, the interaction information generated by the user through the second-level interaction information generation interface is published as the second-level interaction information of the target media content, for example the next-level interaction information of the second interaction information corresponding to the second associated object.

In some optional embodiments, the information generation interface may be used to generate both first level interaction information of the target media content and second-level interaction information of the target media content. Exemplarily, the interaction information generated by the information generation interface may be published as the first-level interaction information or the second-level interaction information of the target media content by different information publishing operations applied on the information generation interface. For example, the generated interaction information may be published as the first-level interaction information of the target media content by the first information publishing operation, and the generated interaction information may be published as the second-level interaction information of the target media content by the second information publishing operation, so as to further enrich the function of the information generation interface and satisfy requirements of the user for publishing different interaction information.

In this case, optionally, in response to the information publishing operation, publishing the first interaction information as the interaction information of the target media content includes: in response to the second information publishing operation, publishing the first interaction information as second-level interaction information of the second interaction information corresponding to the second associated object.

The second information publishing operation may be a trigger operation for instructing publishing of the interaction information generated in the information generation interface as the second-level interaction information of the target media content. The first information publishing operation and the second information publishing operation may be different information publishing operations applied on the information generation interface. For example, the first information publishing operation and the second information publishing operation may be trigger operations for different controls in the information generation interface or trigger operations for triggering a same control in the information generation interface by using different triggering modes, which may be specifically set as needed.

In some optional embodiments, after publishing the first interaction information as interaction information of the target media content, the method further includes: displaying a first associated object of the published first interaction information or information content of the published first interaction information.

The first associated object may be understood as an associated object of the first interaction information, that is, an object corresponding to object information contained in the first interaction information.

In the above embodiment, after in response to the information publishing operation, publishing the first interaction information, the information content of the published first interaction information or the first associated object of the first interaction information may be displayed to facilitate viewing by the user.

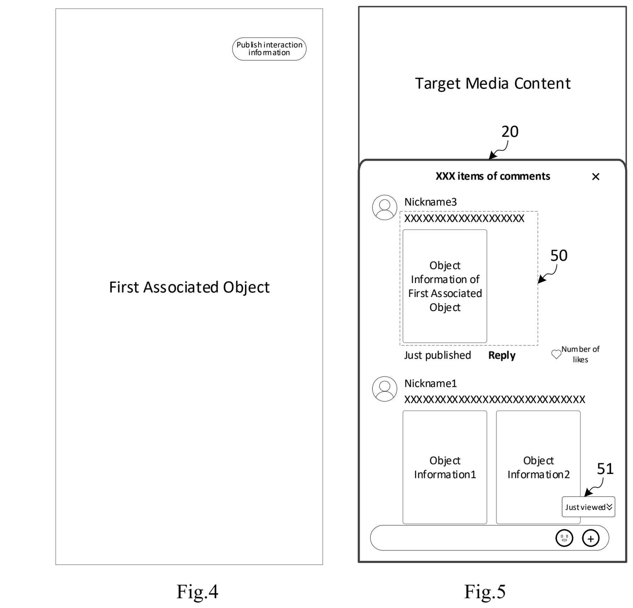

For example, as shown in Fig. 4, after publishing the first interaction information, the first associated object of the first interaction information published by the user may be displayed in the object stream display interface of the target media content. For example, the current interface is switched to the object stream display interface of the target media content, and a certain first associated object of the first interaction information is displayed in the object stream display interface; or the second associated object displayed in the object stream display interface of the target media content is switched to the first associated object. It may be understood that when the first associated object of the first interaction information is displayed in the object stream display interface, at least part of information content of the first interaction information, may also be displayed at the same time, for example, text content of the first interaction information is displayed.

As another example, after publishing the first interaction information, the information content 50 of the first interaction information published by the user may be displayed in the interaction information panel of the target media content. The comment information is illustrated as an example. After publishing the first interaction information, the information content 50 of the first interaction information published by the user may be displayed in the comment panel 20 of the target media content, as shown in Fig. 5, for example, the information content 50 of the first interaction information may be displayed at the display position of first comment information in the comment panel 20.

In some optional embodiments, after displaying of the first associated object of the published first interaction information or the information content of the published first interaction information, the method further includes, in response to a first trigger operation, re-displaying a second associated object that has been displayed before receiving the information generation operation, in the object stream display interface, or displaying information content of second interaction information, the second interaction information being interaction information corresponding to the second associated object.

The first trigger operation may be a trigger operation for instructing display of the second associated object or the second interaction information, for example, an operation of triggering a preset control (for example, a first control) displayed in the interaction information panel or the object stream display interface of the target media content, or a set gesture applied on the interaction information panel or the object stream display interface of the target media content. The preset control may be a control for triggering execution of the first trigger operation, and the control may be displayed when the first associated object or information content of the published first interaction information is displayed in response to an information publishing operation for the first interaction information. In this case, optionally, the displaying the first associated object of the published first interaction information or the information content of the published first interaction information includes: displaying the first associated object of the published first interaction information or the information content of the published first interaction information, and displaying the first control, the first control being used for triggering execution of the first trigger operation. In some embodiments, the first control may be displayed when the second interaction information or the second associated object is not displayed in the currently displayed interaction information panel or object stream display interface.

In the above embodiment, when the information content or the first associated object of the first interaction information published by the user is displayed, the user is supported to quickly locate the second associated object or the second interaction information corresponding to the second associated object viewed before publishing first interaction information, so that the user may continue to view the content viewed before publishing the first interaction information.

Specifically, when the first trigger operation is received, the second associated object displayed in the object stream display interface before receiving the information generation operation may be re-displayed, or the second interaction information corresponding to the second associated object displayed in the object stream generation operation before receiving the information display interface may be displayed.

Exemplarily, after in response to an information publishing operation for the first interaction information, publishing the first interaction information, a first associated object of the first interaction information and a first control may be displayed in the object stream display interface of the target media content. When it is detected that the user triggers the first control, it is determined that the first trigger operation is received, and in response to the first trigger operation, the associated object currently displayed in the object stream display interface is switched from the first associated object to the second associated object displayed before receiving the information publishing operation this time.

Exemplarily, after in response to the information publishing operation for the first interaction information, publishing the first interaction information, the information content of the first interaction information and the first control 51 may also be displayed in the interaction information panel of the target media content, as shown in Fig. 5. When it is detected that the user triggers the first control 51, it is determined that the first trigger operation is received, and in response to the first trigger operation, the information content of the second interaction information is displayed in the interaction information panel of the target media content.

The method for publishing interaction information according to the embodiment includes, displaying an object stream display interface corresponding to target media content, where the object stream display interface is used to display at least one associated object of at least part of interaction information of the target media content, object information of the associated object is contained in the corresponding interaction information, and the object stream display interface supports switching display of the at least one associated object based on a trigger operation; in response to an information generation operation on the object stream display interface, displaying an information generation interface, where the information generation interface is used to generate first interaction information of the target media content; and; in response to an information publishing operation, publishing the first interaction information as interaction information of the target media content. By using the above technical solution, the embodiment supports the user to execute the information generation operation in the object stream display interface without exiting the object stream display interface, which enriches the interaction mode of the object stream display interface and the publishing mode of the interaction information, and simplifies the operation required for the user to publish the interaction information when the object stream display interface is displayed.

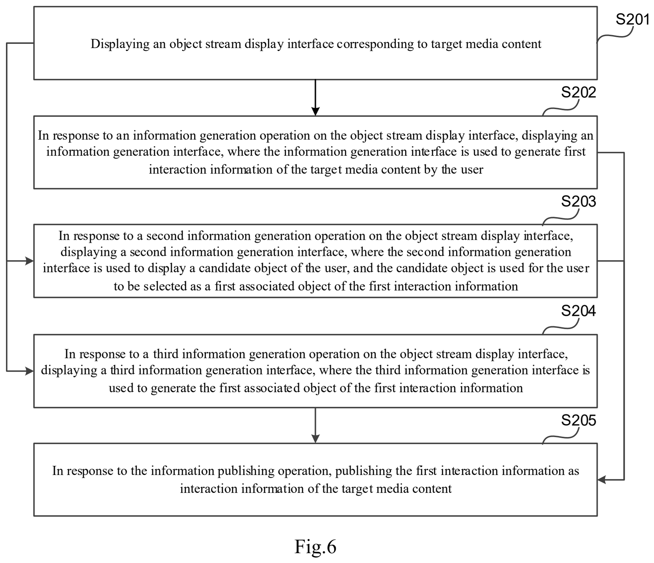

Fig. 6 is a schematic flow diagram of another method for publishing interaction information according to an embodiment of the present disclosure. The solution in this embodiment may be combined with one or more of the optional solutions in the above embodiments. Optionally, in response to the information generation operation on the object stream display interface, displaying the information generation interface includes at least one of the group consisting of: in response to a first information generation operation on the object stream display interface, displaying a first information generation interface, where the first information generation interface is used for a user to input information content of the first interaction information; in response to a second information generation operation on the object stream display interface, displaying a second information generation interface, where the second information generation interface is used to display a candidate object of the user, and the candidate object is used for the user to be selected as a first associated object of the first interaction information; in response to a third information generation operation on the object stream display interface, displaying a third information generation interface, where the third information generation interface is used to generate the first associated object of the first interaction information.

Accordingly, as shown in Fig. 6, the method for publishing interaction information provided in the present embodiment may include:

S201, displaying an object stream display interface corresponding to target media content to execute at least one of S202-S204, where the object stream display interface is used to display at least one associated object of at least part of interaction information of the target media content, object information of the associated object is contained in corresponding interaction information, and the object stream display interface supports switching display of the at least one associated object based on a trigger operation.

S202, in response to an information generation operation on the object stream display interface, displaying an information generation interface, to execute S205, where the information generation interface is used to generate first interaction information of the target media content by the user.

The first information generation operation may be understood as a trigger operation for instructing display of the first information generation interface, for example, an operation for triggering a second control for triggering execution of the first information generation operation displayed in the object stream display interface, or the like. The first information generation interface may be an interface for a user to input at least part of the information content of the first interaction information, and the first information generation interface may include an information input area for the user to input.

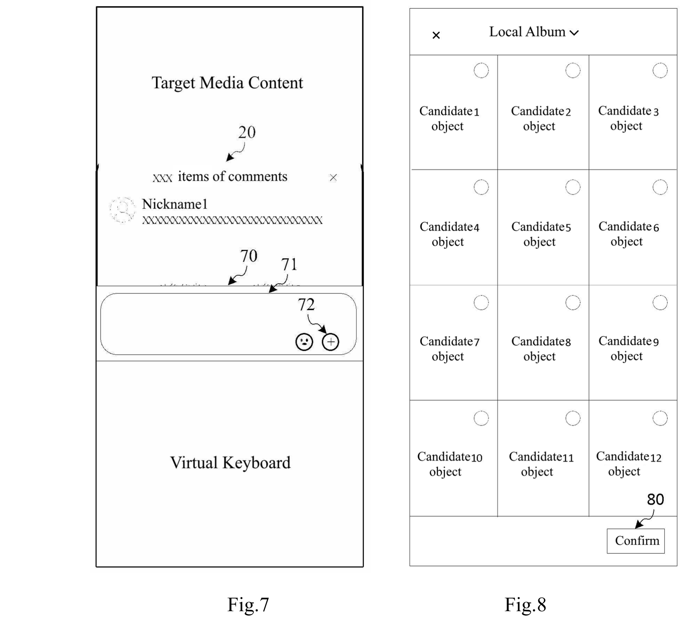

Exemplarily, as shown in Fig. 3, a second control 30 for instructing display of the first information generation interface may be displayed in the object stream display interface of the target media content. Accordingly, when it is detected that the user triggers the second control 30, it is determined that the first information generation operation is received, and the first information generation interface 70 may be displayed in response to the first information generation operation, as shown in Fig. 7 (the interaction information is illustrated as an example in the figure), so that the user may input the text content to be published in the information input area 71 of the first information generation interface 70. Further, when the first information generation interface 70 is displayed, the virtual keyboard may be further displayed to facilitate input by the user.

The display mode of the first information generation interface 70 is not limited, and for example, the first information generation interface 70 may be displayed in the object stream display interface of the target media content. In some embodiments, in a case where the object stream display interface of the target media content is displayed in response to a certain trigger operation on the interaction information panel of the target media content, when the first information generation applied on the object stream display interface is received, the current interface may be switched from the object stream display interface of the target media content to the display interface of the target media content, the interaction information panel may be re-displayed in the display interface of the target media content, and the first information generation interface 70 may be displayed on the upper layer of the interaction information panel, as shown in Fig. 7, so that the user may view the information content of the first interaction information published by the user in the interaction information panel after publishing the first interaction information.

In the present embodiment, after displaying the first information generation interface, the user may input the text content to be published by the user in the information input area of the first information input panel. Accordingly, the current application program may display the text content input by the user in the first information generation interface. In this case, optionally, after displaying the first information generation interface, the method further includes: in response to an information input operation on the first information generation interface, displaying character input by the user on the first information generation interface. The information input operation may be an operation of inputting characters in the first information generation interface, for example, an operation of inputting characters in the information input area of the first information generation interface, and the content input by the user in the information input area may be the text content of the first interaction information.

In the embodiment, the first information generation interface may support the user to switch to the second information generation interface or the third information generation interface, for example, a control for the user to trigger switching to the second information generation interface and/or a control for the user to trigger switching to the third information generation interface may be displayed in the first information generation interface, so as to facilitate the user to switch to the second information generation interface/the third information generation interface to select or generate an associated object of the first interaction information. In this case, optionally, after displaying the first information generation interface, the method further includes in response to an object acquisition operation on the first information generation interface, switching a current interface from the first information generation interface to the second information generation interface or the third information generation interface.

The object acquisition operation may be a trigger operation for instructing switch of the current interface from the first information generation interface to the second information generation interface or the third information generation interface, for example, an operation of triggering the corresponding control displayed in the first information generation interface, or the like. The second information generation interface may be an associated object selection interface, for example, a local album of the user. The third information generation interface may an associated object generation interface, for example, a photographing page.

Switching to the second information generation interface is illustrated as an example, as shown in Fig. 7, an object display control 72 for triggering switch to the second information generation interface may be displayed in the first information generation interface 70. Accordingly, when it is detected that the user triggers the object display control 72, the current interface may be switched from the first information generation interface 70 to the second information generation interface, as shown in Fig. 8 (in the figure, an example in which the second information generation interface is the local album of the user is illustrated), and at least part of the candidate objects generated by the user may be displayed in the second information generation interface for the user to select the associated object of the first interaction information to be published.

S203, in response to a second information generation operation on the object stream display interface, displaying a second information generation interface, to execute S205. The second information generation interface is used to display a candidate object of the user, and the candidate object is used for the user to be selected as a first associated object of the first interaction information.

The second information generation operation may be a trigger operation for instructing display of the second information generation interface, for example, an operation for triggering a second control for triggering execution of the second information generation operation displayed in the object stream display interface, or the like. The candidate object may be an object for the user to be selected as a first associated object of the first interaction information, such as picture and/or video photographed by the user, or the like.

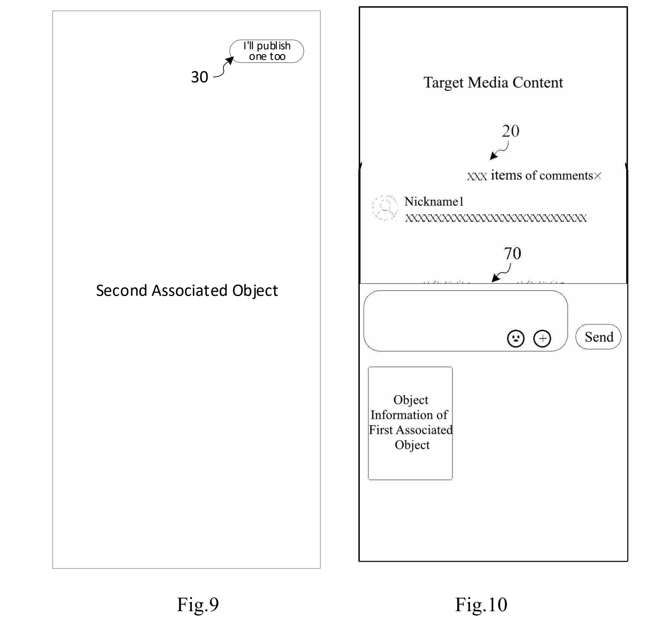

Exemplarily, as illustrated in Fig. 9, a second control 30 for instructing display of a second information generation interface may be displayed in the object stream display interface of the target media content. Thus, when it is detected that the user triggers the second control 30, it may be determined that the second information generation operation is received, and in response to the second information generation operation, a second information generation interface is displayed, as shown in Fig. 8, for the user to select a first associated object of the first interaction information to be published.

**In** the embodiment, after displaying the second information generation interface, the user may select one or more candidate object in the second information generation interface as the first associated object of the first interaction information, and may perform a selection completion operation after the selection is completed. The selection completion operation may be a trigger operation for instructing the selection completion, for example, the selection completion control 80 (as shown in Fig. 8) displayed in the second information generation interface.

In some embodiments, a selection completion and publishing control may also be displayed in the second information generation interface. When it is detected that the user triggers the selection completion and publishing control, the object information of the first associated object selected by the user may be taken as the information content of the first interaction information, and the first interaction information may be published, that is, the operation of triggering the selection completion and publishing control by the user may be determined as the information publishing operation for the first interaction information.

After receiving the selection completion operation of the user, the current application program may not directly publish the first interaction information, for example, when it is detected that the user triggers the selection completion control, the current interface may be switched from the second information generation interface to the first information generation interface, and object information of the first associated object selected by the user may be displayed in the first information generation interface, as shown in Fig. 10, so that the user inputs text content of the first interaction information in the first information generation interface and/or edit the object information of the first associated object, for example, delete part of the object information or adjust the arrangement order of one piece or more pieces of object information in the first interaction information. In this case, after displaying the second information generation interface, the method may further include: in response to a selection completion operation on the second information generation interface, switching a current interface from the second information generation interface to the first information generation interface, and displaying object information of the candidate object selected by the user in the first information generation interface.

S204, in response to a third information generation operation on the object stream display interface, displaying a third information generation interface, where the third information generation interface is used to generate the first associated object of the first interaction information.

The third information generation operation may be a trigger operation for instructing display of the third information generation interface, for example an operation for triggering the second control for triggering execution of the third information generation operation displayed in the object stream display interface, or the like. The third information generation interface may be an interface for generating an associated object, that is, an associated object generation interface, which may be, for example, a photographing page.

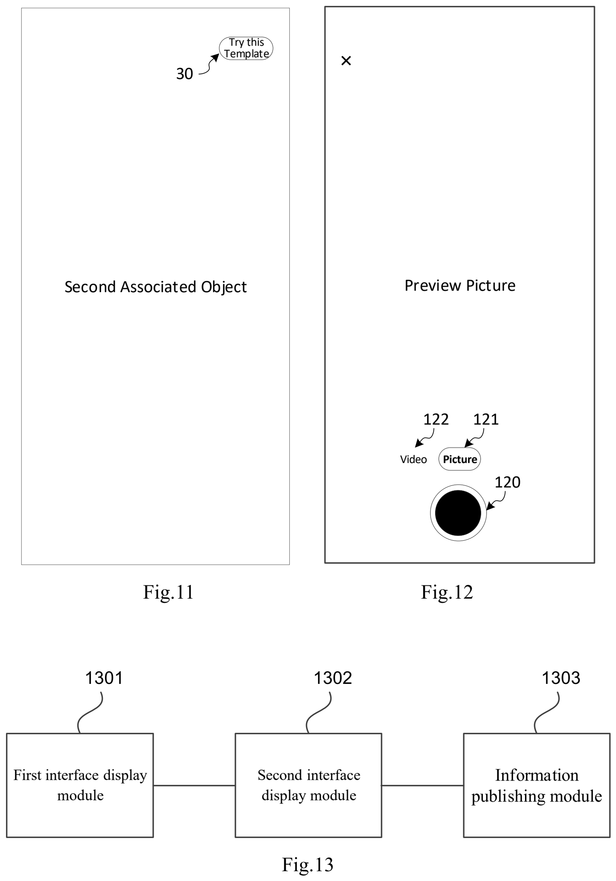

For example, as shown in Fig. 11, the second control 30 for instructing display of the third information generation interface may be displayed in the object stream display interface of the target media content. For example, the second display interface 30 for instructing display of the third information generation interface may be displayed in the object stream display interface when the associated object displayed in the object stream display interface is an object generated using a certain element. Accordingly, when it is detected that the user triggers the second control 30, it is determined that the third information generation operation is received, and in response to the third information generation operation, a third information generation interface is displayed, as shown in Fig. 12, for the user to generate a first associated object of the first interaction information to be published by the user in the third information generation interface.

In the embodiment, when the third information generation interface is displayed, a display effect generated based on the target element used by the second associated object may be further displayed. For example, a preview picture when photographing using the target element is displayed in the third information generation interface, for viewing by the user. In this case, displaying the third information generation interface may include: displaying the third information generation interface, and displaying a display effect generated based on a target element in the third information generation interface, the target element being an element used to generate a second associated object and the second associated object being an associated object currently displayed in the object stream display interface. The second associated object may be understood as an associated object displayed in the object stream display interface before receiving the information generation operation. The target element may be regarded as an element used in generating the second associated object, and the element may be, for example, a special effect, a template, a filter, sticker, and/or music used in generating the second associated object, and may be specifically set as necessary. The display effect generated based on the target element may be understood as a display effect when an associated object is generated using the target element, for example, a preview effect of a new object generated using the target element.

In the embodiment, after displaying the third information generation interface, the user may generate the first associated object of the first interaction information in the third information generation interface, for example, photographing the first associated object of the first interaction information in the third information generation interface.

Accordingly, after generating the first associated object of the first interaction information, the current application program may use the generated object information of the first associated object as the information content of the first interaction information, and publish the first interaction information.

In addition, after generating the first associated object of the first interaction information, the current application program may not publish the first interaction information. For example, the current interface may be switched from the third information generation interface to the first information generation interface, and the generated object information of the first associated object may be displayed in the first information generation interface, so that the user may input the text content of the first interaction information and/or edit the object information of the first associated object in the first information generation interface. In this case, optionally, after displaying the third information generation interface, the method further includes: in response to an object generation operation on the third information generation interface, generating a first associated object; switching a current interface from the third information generation interface to the first information generation interface, and displaying object information of the first associated object in the first information generation interface. The object generation operation may be a trigger operation for instructing generation of the first associated object of the first interaction information, for example, a trigger operation applied on an object generation control 120 (as shown in Fig. 12) in the third information generation interface.

**In** the embodiment, the third information generation interface may further include at least one type control, so that the user may generate different types of associated objects in the third information generation interface by selecting different type controls. For example, as shown in Fig. 12 (an example in which the picture type control 121 is in the selected state is illustrated), the picture type control 121 and the video type control 122 may be displayed in the third information generation interface. When the picture type control 121 is in the selected state, the third information generation interface may be used to generate the first associated object of the picture type. When the video type control 122 is in the selected state, the third information generation interface may be used to generate a first associated object of the video type. In this case, optionally, the type of the first associated object corresponds to a type control in the selected state in the third information generation interface, the type of the first associated object includes at least one of picture and video, and the method further includes, in response to a type switching operation on the third information generation interface, switching a type control in the selected state. The type switching control may be a trigger operation for instructing switch of a type control in the selected state in the third information generation interface, for example, an operation of triggering a certain type control in an unselected state in the information generation interface.

In some optional embodiments, the type of the second associated object may not be considered. The preset type control in the third information generation may be displayed as a selected state when the third information generation interface is displayed in response to the third information generation operation. The preset type control may be understood as a certain type control set in advance, such as a picture type control or a video type control. In this case, optionally, displaying the third information generation interface includes: displaying the third information generation interface, and displaying a preset type control in the third information generation interface as the selected state.

**In** another optional embodiment, the type of the second associated object may be considered. When the third information generation interface is displayed in response to the third information generation operation according to the difference of the type of the second associated object, the different types of controls in the third information generation interface are displayed in the selected state, so that the user generates the first associated object having the same type as the second associated object through the third information generation interface. **In** this case, optionally, displaying the third information generation interface includes: displaying the third information generation interface, and displaying a target type control in the third information generation interface as the selected state. The target type control is a type control corresponding to an object type of a second associated object, and the second associated object is an associated object currently displayed in the object stream display interface.

Exemplarily, when the second associated object is an associated object of the picture type, the third information generation interface may be displayed in response to the third information generation operation, and the picture type control in the third information generation interface may be displayed as the selected state. When the second associated object is an associated object of the video type, the third information generation interface may be displayed in response to the third information generation operation, and the video type control in the third information generation interface may be displayed as the selected state.

S205: In response to the information publishing operation, publishing the first interaction information as interaction information of the target media content.

The method for publishing the interaction information provided in the present embodiment supports the user to generate the first interaction information in different ways, which may further enrich the generation mode of the first interaction information, and satisfies different information generation requirements of the user.

Fig. 13 is a structural block diagram of an apparatus for publishing interaction information according to an embodiment of the present disclosure. The apparatus may be implemented by software and/or hardware, may be configured in an electronic device, typically may be configured in a mobile phone or tablet computer. It may be configured by performing a method for publishing interaction information adapted to trigger publishing of new interaction information in the object stream display interface of the media content, for example, trigger publishing of new comment information in the picture and/or video stream display interface of comment information of the media content. As illustrated in Fig. 13, the apparatus for publishing interaction information according to the embodiment may include,
the first interface display module 1301, configured to display an object stream display interface corresponding to target media content, where the object stream display interface is used to display at least one associated object of at least part of interaction information of the target media content, object information of the associated object is contained in corresponding interaction information, and the object stream display interface supports switching display of the at least one associated object based on a trigger operation;
a second interface display module 1302, configured to in response to an information generation operation on the object stream display interface, display an information generation interface, where the information generation interface is used to generate first interaction information of the target media content; and
an information publishing module 1303, configured to in response to an information publishing operation, publish the first interaction information as interaction information of the target media content.

The apparatus for publishing interaction information according to the embodiment, displays an object stream display interface corresponding to target media content by the first interface display module, where the object stream display interface is used to display at least one associated object of at least part of interaction information of the target media content, object information of the associated object is contained in the corresponding interaction information, and the object stream display interface supports switching display of the at least one associated object based on a trigger operation; in response to an information generation operation on the object stream display interface, display an information generation interface by the second interface display module, where the information generation interface is used to generate first interaction information of the target media content; and; in response to an information publishing operation, publish the first interaction information as interaction information of the target media content by the information publishing module. By using the above technical solution, the embodiment supports the user to execute the information generation operation in the object stream display interface without exiting the object stream display interface, which enriches the interaction mode of the object stream display interface and the publishing mode of the interaction information, and simplifies the operation required for the user to publish the interaction information when the object stream display interface is displayed.

In the above solution, the information publishing module 1303 may include a first information publishing unit, configured to in response to a first information publishing operation, publish the first interaction information as first-level interaction information of the target media content, where the interaction information of the target media content includes first-level interaction information and second-level interaction information, and the second-level interaction information is reply content for the interaction information.

In the above solution, the second interface display module 1302 may include at least one of: a first information generation unit, configured to in response to a first information generation operation on the object stream display interface, display a first information generation interface, where the first information generation interface is used for a user to input information content of the first interaction information; a second information generation unit, configured to in response to a second information generation operation on the object stream display interface, display a second information generation interface, where the second information generation interface is used to display a candidate object of the user, and the candidate object is used for the user to be selected as a first associated object of the first interaction information; a third information generation unit, configured to in response to a third information generation operation on the object stream display interface, display a third information generation interface, where the third information generation interface is used to generate the first associated object of the first interaction information.

Further, the apparatus for publishing interaction information according to the embodiment may further include at least one of the following: an information input module, configured to after displaying the first information generation interface, in response to an information input operation on the first information generation interface, display a character input by the user on the first information generation interface; a first switching module, configured to after displaying the first information generation interface, in response to an object acquisition operation on the first information generation interface, switch a current interface from the first information generation interface to the second information generation interface or the third information generation interface.

Further, the apparatus for publishing interaction information according to the embodiment may further include: a second switching module, configured to after the displaying a second information generation interface, in response to a selection completion operation on the second information generation interface, switch a current interface from the second information generation interface to the first information generation interface, and display object information of the candidate object selected by the user in the first information generation interface.

In the above solution, the third information generation unit may be configured to display a third information generation interface, and display a display effect generated based on a target element in the third information generation interface, where the target element is an element used to generate a second associated object, and the second associated object is an associated object currently displayed in the object stream display interface.

Further, the apparatus for publishing interaction information according to the present embodiment may further include: an object generation module, configured to after displaying the third information generation interface, in response to an object generation operation on the third information generation interface, generate a first associated object ;a third switching module, configured to switch a current interface from the third information generation interface to the first information generation interface, and display object information of the first associated object in the first information generation interface.

In the above solution, a type of the first associated object may correspond to a type control in a selected state in the third information generation interface, and the apparatus for publishing interaction information according to the present embodiment may further include: a fourth switching module configured to in response to a type switching operation on the third information generation interface, switch the type control in the selected state.

In the above solution, the third information generation unit may be configured to: display the third information generation interface, and display a preset type control in the third information generation interface as the selected state ; or, display the third information generation interface, and display a target type control in the third information generation interface as the selected state, where the target type control is a type control corresponding to an object type of a second associated object, and the second associated object is an associated object currently displayed in the object stream display interface.

In the above solution, a publishing control is displayed in at least one of the first information generation interface, the second information generation interface, and the third information generation interface, and the publishing control is used to trigger execution of the information publishing operation.

Further, the apparatus for publishing interaction information according to the present embodiment may further include: a first display module, configured to after publishing the first interaction information as interaction information of the target media content, display a first associated object of the published first interaction information or information content of the published first interaction information.

Further, the apparatus for publishing interaction information according to the present embodiment may further include: a second display module configured to after displaying the first associated object of the published first interaction information or information content of the published first interaction information, in response to a first trigger operation, re-display a second associated object that has been displayed before receiving the information generation operation, in the object stream display interface or display information content of second interaction information, the second interaction information being interaction information corresponding to the second associated object.

In the above solution, the first display module may be configured to display the first associated object of the published first interaction information or the information content of the published first interaction information, and display a first control, the first control being used to trigger execution of the first trigger operation.

In the above solution, the information generation operation may be applied on a second control, the second control may remain being displayed in the object stream display interface or the second control may be displayed in the object stream display interface when a preset display condition is satisfied.

In the above solution, the information generation interface may be a first-level interaction information generation interface, the first-level interaction information generation interface may be used to generate first-level interaction information, and the apparatus for publishing interaction information according to the present embodiment may further include: a third interface display module, configured to in response to a second trigger operation on the object stream display interface, display a second-level interaction information generation interface, the second-level interaction information being used to generate the second-level interaction information.

In the above solution, the information publishing module 1303 may include a second information publishing unit, configured to in response to a second information publishing operation, publish the first interaction information as second-level interaction information of second interaction information corresponding to a second associated object.

The apparatus for publishing interaction information according to the embodiment of the present disclosure may execute the method for publishing interaction information according to any embodiment of the present disclosure, and has functional modules and beneficial effects corresponding to the execution of the method for publishing interaction information. For technical details not described in detail in this embodiment, please refer to the method for publishing interaction information provided by any embodiment of the present disclosure.

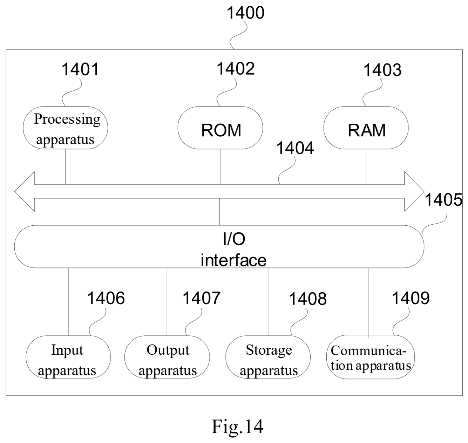

Referring to Fig. 14, Fig. 14 illustrates a schematic structural diagram of an electronic device (for example, a terminal device)1400 suitable for implementing some embodiments of the present disclosure. The electronic devices in some embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), a wearable electronic device or the like, and fixed terminals such as a digital TV, a desktop computer, or the like. The electronic device illustrated in Fig. 14 is merely an example, and should not pose any limitation to the functions and the range of use of the embodiments of the present disclosure.

As illustrated in Fig. 14, the electronic device 1400 may include a processing apparatus 1401 (e.g., a central processing unit, a graphics processing unit, etc.), which can perform various suitable actions and processing according to a program stored in a read-only memory (ROM) 1402 or a program loaded from a storage apparatus 1408 into a random-access memory (RAM) 1403. The RAM 1403 further stores various programs and data required for operations of the electronic device 500. The processing apparatus 1401, the ROM 1402, and the RAM 1403 are interconnected by means of a bus 1404. An input/output (I/O) interface 1405 is also connected to the bus 1404.

Usually, the following apparatus may be connected to the I/O interface 1405: an input apparatus 1406 including, for example, a touch screen, a touch pad, a keyboard, a mouse, a camera, a microphone, an accelerometer, a gyroscope, or the like; an output apparatus 1407 including, for example, a liquid crystal display (LCD), a loudspeaker, a vibrator, or the like; a storage apparatus 1408 including, for example, a magnetic tape, a hard disk, or the like; and a communication apparatus 1409. The communication apparatus 509 may allow the electronic device 1400 to be in wireless or wired communication with other devices to exchange data. While Fig. 14 illustrates the electronic device 1400 having various apparatuses, it should be understood that not all of the illustrated apparatuses are necessarily implemented or included. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 1409 and installed, or may be installed from the storage apparatus 1408, or may be installed from the ROM 1402. When the computer program is executed by the processing apparatus 1401, the above-mentioned functions defined in the methods of some embodiments of the present disclosure are performed.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. **In** the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some implementation modes, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned electronic device, or may also exist alone without being assembled into the electronic device.

The computer-readable medium carries one or more programs, and when the one or more programs are executed by the electronic device, the electronic device is caused to perform: displaying an object stream display interface corresponding to target media content, where the object stream display interface is used to display at least one associated object of at least part of interaction information of the target media content, object information of the associated object is contained in corresponding interaction information, and the object stream display interface supports switching display of the at least one associated object based on a trigger operation; in response to an information generation operation on the object stream display interface, displaying an information generation interface, where the information generation interface is used to generate first interaction information of the target media content; in response to an information publishing operation, publishing the first interaction information as interaction information of the target media content.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. **In** the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The units involved in the embodiments of the present disclosure may be implemented in software or hardware. Among them, the name of the module or unit does not constitute a limitation of the unit itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

According to one or more embodiments of the present disclosure, Example 1 provides a method for publishing interaction information, including:
displaying an object stream display interface corresponding to target media content, where the object stream display interface is used to display at least one associated object of at least part of interaction information of the target media content, where object information of the associated object is contained in corresponding interaction information, and the object stream display interface supports switching display of the at least one associated object based on a trigger operation;
in response to an information generation operation on the object stream display interface, displaying an information generation interface, where the information generation interface is used to generate first interaction information of the target media content;
in response to an information publishing operation, publishing the first interaction information as interaction information of the target media content.

According to one or more embodiments of the present disclosure, Example 2 the method of Example 1, the in response to an information publishing operation, publishing the first interaction information as interaction information of the target media content includes,
in response to a first information publishing operation, publishing the first interaction information as first-level interaction information of the target media content, where the interaction information of the target media content includes first-level interaction information and second-level interaction information, and the second-level interaction information is reply content for the interaction information.

According to one or more embodiments of the present disclosure, Example 3 the method of Example 1, the in response to an information generation operation on the object stream display interface, displaying an information generation interface includes at least one of:
in response to a first information generation operation on the object stream display interface, displaying a first information generation interface, where the first information generation interface is used for a user to input information content of the first interaction information;
in response to a second information generation operation on the object stream display interface, displaying a second information generation interface, where the second information generation interface is used to display a candidate object of the user, and the candidate object is used for the user to be selected as a first associated object of the first interaction information;
in response to a third information generation operation on the object stream display interface, displaying a third information generation interface, where the third information generation interface is used to generate the first associated object of the first interaction information.

According to one or more embodiments of the present disclosure, Example 4 the method of Example 3, after displaying a first information generation interface, the method further includes at least one of:
in response to an information input operation on the first information generation interface, displaying a character input by the user on the first information generation interface; and
in response to an object acquisition operation on the first information generation interface, switching a current interface from the first information generation interface to the second information generation interface or the third information generation interface.

According to one or more embodiments of the present disclosure, Example 5 the method of Example 3, after displaying a second information generation interface, the method further includes:
in response to a selection completion operation on the second information generation interface, switching a current interface from the second information generation interface to the first information generation interface, and displaying object information of the candidate object selected by the user in the first information generation interface.

According to one or more embodiments of the present disclosure, Example 6 the method of Example 3, the displaying a third information generation interface includes:
displaying a third information generation interface, and displaying a display effect generated based on a target element in the third information generation interface, where the target element is an element used to generate a second associated object, and the second associated object is an associated object currently displayed in the object stream display interface.

According to one or more embodiments of the present disclosure, Example 7 the method of Example 3, after the displaying a third information generation interface, the method further includes:
in response to an object generation operation on the third information generation interface, generating a first associated object;
switching a current interface from the third information generation interface to the first information generation interface, and displaying object information of the first associated object in the first information generation interface.

According to one or more embodiments of the present disclosure, Example 8 the method of Example 7, type of the first associated object corresponds to a type control in a selected state in the third information generation interface, and the type of the first associated object includes at least one of a picture and a video, the method further includes:
in response to a type switching operation on the third information generation interface, switching the type control in the selected state.

According to one or more embodiments of the present disclosure, Example 9 the method of Example 8, the displaying a third information generation interface includes:
displaying the third information generation interface, and displaying a preset type control in the third information generation interface as the selected state; or
displaying the third information generation interface, and displaying a target type control in the third information generation interface as the selected state, where the target type control is a type control corresponding to an object type of a second associated object, and the second associated object is an associated object currently displayed in the object stream display interface.

According to one or more embodiments of the present disclosure, Example 10 the method of Example 3, a publishing control is displayed in at least one of the first information generation interface, the second information generation interface, and the third information generation interface, and the publishing control is used to trigger execution of the information publishing operation.

According to one or more embodiments of the present disclosure, Example 11 the method of any one of Examples 1-10, after the publishing the first interaction information as interaction information of the target media content, the method further includes:
displaying a first associated object of the published first interaction information or information content of the published first interaction information.

According to one or more embodiments of the present disclosure, Example 12 the method of Example 11, after the displaying a first associated object of the published first interaction information or information content of the published first interaction information, the method further includes:
in response to a first trigger operation, re-displaying a second associated object that has been displayed before receiving the information generation operation, in the object stream display interface, or displaying information content of second interaction information, the second interaction information being interaction information corresponding to the second associated object.

According to one or more embodiments of the present disclosure, Example 13 the method of Example 12, the displaying a first associated object of the published first interaction information or information content of the published first interaction information includes:
displaying the first associated object of the published first interaction information or the information content of the published first interaction information, and displaying a first control, the first control being used to trigger execution of the first trigger operation.

According to one or more embodiments of the present disclosure, Example 14 the method of any one of Examples 1-10, the information generation operation is applied on a second control, the second control remains being displayed in the object stream display interface or the second control is displayed in the object stream display interface when a preset display condition is satisfied.

According to one or more embodiments of the present disclosure, Example 15 the method of any one of Examples 1-10, the information generation interface is a first-level interaction information generation interface, the first-level interaction information generation interface is used to generate first-level interaction information, and the method further includes:
in response to a second trigger operation on the object stream display interface, displaying a second-level interaction information generation interface, the second-level interaction information being used to generate the second-level interaction information.

According to one or more embodiments of the present disclosure, Example 16 the method of any one of Examples 1-10, the in response to an information publishing operation publishing the first interaction information as interaction information of the target media content includes:
in response to a second information publishing operation, publishing the first interaction information as second-level interaction information of second interaction information corresponding to a second associated object.

According to one or more embodiments of the present disclosure, Example 17 provides an apparatus for publishing interaction information, including:
a first interface display module, configured to display an object stream display interface corresponding to target media content, where the object stream display interface is used to display at least one associated object of at least part of interaction information of the target media content, object information of the associated object is contained in corresponding interaction information, and the object stream display interface supports switching display of the at least one associated object based on a trigger operation;
a second interface display module, configured to in response to an information generation operation on the object stream display interface, display an information generation interface, where the information generation interface is used to generate first interaction information of the target media content; and;
an information publishing module, configured to in response to an information publishing operation, publish the first interaction information as interaction information of the target media content.

According to one or more embodiments of the present disclosure, Example 18 provides an electronic device including:
one or more processors;
a memory, configured to storing one or more programs,
when the one or more programs are executed by the one or more processor, the one or more processors implement the method for publishing interaction information of any one of Examples 1-16.

According to one or more embodiments of the present disclosure, Example 19 provides a computer-readable storage medium having computer program stored thereon, and when executed by a processor, the program implements the method for publishing interaction information as described in any one of Examples 1-16.

The foregoing descriptions are merely preferred embodiments of the present disclosure and explanations of the applied technical principles. Persons skilled in the art should understand that the scope of disclosure involved in the present disclosure is not limited to the technical solutions formed by a specific combination of the foregoing technical features, and shall also cover other technical solutions formed by any combination of the foregoing technical features or equivalent features thereof without departing from the foregoing concept of disclosure, for example, the technical solutions formed by replacing the foregoing features with technical features with similar functions disclosed in the present disclosure (but not limited thereto).

In addition, although the various operations are depicted in a specific order, it should be understood as requiring these operations to be performed in the specific order shown or in a sequential order. Under specific circumstances, multitasking and parallel processing may be advantageous. Similarly, although several specific implementation details are included in the foregoing discussions, these details should not be construed as limiting the scope of the present disclosure. Some features that are described in the context of separate embodiments also may be implemented in combination in a single embodiment. In contrast, various features described in a single embodiment also may be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. A method for publishing interaction information, comprising:
displaying an object stream display interface corresponding to target media content, wherein the object stream display interface is used to display at least one associated object of at least part of interaction information of the target media content, wherein object information of the associated object is contained in corresponding interaction information, and the object stream display interface supports switching display of the at least one associated object based on a trigger operation;
in response to an information generation operation on the object stream display interface, displaying an information generation interface, wherein the information generation interface is used to generate first interaction information of the target media content; and
in response to an information publishing operation, publishing the first interaction information as interaction information of the target media content.

2. The method of claim 1, wherein the in response to an information publishing operation, publishing the first interaction information as interaction information of the target media content comprises:
in response to a first information publishing operation, publishing the first interaction information as first-level interaction information of the target media content, wherein the interaction information of the target media content comprises first-level interaction information and second-level interaction information, and the second-level interaction information is reply content for the interaction information.

3. The method of claim 1, wherein the in response to an information generation operation on the object stream display interface, displaying an information generation interface comprises at least one of the group consisting of:
in response to a first information generation operation on the object stream display interface, displaying a first information generation interface, wherein the first information generation interface is used for a user to input information content of the first interaction information;
in response to a second information generation operation on the object stream display interface, displaying a second information generation interface, wherein the second information generation interface is used to display a candidate object of the user, and the candidate object is used for the user to be selected as a first associated object of the first interaction information; and
in response to a third information generation operation on the object stream display interface, displaying a third information generation interface, wherein the third information generation interface is used to generate the first associated object of the first interaction information.

4. The method of claim 3, wherein, after displaying a first information generation interface, the method further comprises at least one of the group consisting of:
in response to an information input operation on the first information generation interface, displaying a character input by the user on the first information generation interface; and
in response to an object acquisition operation on the first information generation interface, switching a current interface from the first information generation interface to the second information generation interface or the third information generation interface.

5. The method of claim 3, wherein, after the displaying a second information generation interface, the method further comprises:
in response to a selection completion operation on the second information generation interface, switching a current interface from the second information generation interface to the first information generation interface, and displaying object information of the candidate object selected by the user in the first information generation interface.

6. The method of claim 3, wherein the displaying a third information generation interface comprises:
displaying a third information generation interface, and displaying a display effect generated based on a target element in the third information generation interface, wherein the target element is an element used to generate a second associated object, and the second associated object is an associated object currently displayed in the object stream display interface.

7. The method of claim 3, wherein, after the displaying a third information generation interface, the method further comprises:
in response to an object generation operation on the third information generation interface, generating a first associated object;
switching a current interface from the third information generation interface to the first information generation interface, and displaying object information of the first associated object in the first information generation interface.

8. The method of claim 7, wherein a type of the first associated object corresponds to a type control in a selected state in the third information generation interface, and the type of the first associated object comprises at least one of the group consisting of a picture and a video, the method further comprises:
in response to a type switching operation on the third information generation interface, switching the type control in the selected state.

9. The method of claim 8, wherein the displaying a third information generation interface comprises:
displaying the third information generation interface, and displaying a preset type control in the third information generation interface as the selected state; or
displaying the third information generation interface, and displaying a target type control in the third information generation interface as the selected state, wherein the target type control is a type control corresponding to an object type of a second associated object, and the second associated object is an associated object currently displayed in the object stream display interface.

10. The method of claim 3, wherein a publishing control is displayed in at least one of the group consisting of the first information generation interface, the second information generation interface, and the third information generation interface, and the publishing control is used to trigger execution of the information publishing operation.

11. The method of any one of claims 1-10, wherein, after the publishing the first interaction information as interaction information of the target media content, the method further comprises:
displaying a first associated object of the published first interaction information or information content of the published first interaction information.

12. The method of claim 11, wherein after the displaying a first associated object of the published first interaction information or information content of the published first interaction information, the method further comprises:
in response to a first trigger operation, re-displaying a second associated object that has been displayed before receiving the information generation operation, in the object stream display interface, or displaying information content of second interaction information, the second interaction information being interaction information corresponding to the second associated object.

13. The method of claim 12, wherein the displaying a first associated object of the published first interaction information or information content of the published first interaction information comprises:
displaying the first associated object of the published first interaction information or the information content of the published first interaction information, and displaying a first control, wherein the first control is used to trigger execution of the first trigger operation.

14. The method of any one of claims 1-10, wherein the information generation operation is applied on a second control, and the second control remains being displayed in the object stream display interface or the second control is displayed in the object stream display interface when a preset display condition is satisfied.

15. The method of any one of claims 1-10, wherein the information generation interface is a first-level interaction information generation interface, the first-level interaction information generation interface is used to generate first-level interaction information, and the method further comprises:
in response to a second trigger operation on the object stream display interface, displaying a second-level interaction information generation interface, wherein the second-level interaction information is used to generate the second-level interaction information.

16. The method of any one of claims 1-10, wherein the in response to an information publishing operation publishing the first interaction information as interaction information of the target media content comprises:
in response to a second information publishing operation, publishing the first interaction information as second-level interaction information of second interaction information corresponding to a second associated object.

17. An apparatus for publishing interaction information, comprising:
a first interface display module, configured to display an object stream display interface corresponding to target media content, wherein the object stream display interface is used to display at least one associated object of at least part of interaction information of the target media content, wherein object information of the associated object is contained in corresponding interaction information, and the object stream display interface supports switching display of the at least one associated object based on a trigger operation;
a second interface display module, configured to in response to an information generation operation on the object stream display interface, display an information generation interface, wherein the information generation interface is used to generate first interaction information of the target media content; and
an information publishing module, configured to in response to an information publishing operation, publish the first interaction information as interaction information of the target media content.

18. An electronic device comprising:
at least one processor; and
a memory communicatively connected to the at least one processor; wherein
the memory stores computer program executable by the at least one processor, the computer program is executed by the at least one processor to enable the at least one processor to perform the method for publishing interaction information according to any one of claims 1-16.

19. A computer-readable storage medium, wherein the computer-readable storage medium stores computer instructions and the computer instructions are used to cause a processor to execute to implement the method for publishing interaction information according to any one of claims 1 to 16.
